# EUROPÄISCHE PATENTSCHRIFT

(11) **EP 3 976 426 B1**
(45) Veröffentlichungstag und Bekanntmachung des Hinweises auf die Patenterteilung: **05.04.2023**
(21) Anmeldenummer: 20728724.4
(22) Anmeldetag: 26.05.2020
(51) Int. Cl.: B60S 3/06

(54) **VERFAHREN ZUM BETREIBEN EINER FAHRZEUGBEHANDLUNGSANLAGE, FAHRZEUGBEHANDLUNGSANLAGE, VERWENDUNG EINER FAHRZEUGBEHANDLUNGSANLAGE, UND COMPUTERPROGRAMMPRODUKT**
METHOD FOR OPERATING A VEHICLE TREATMENT SYSTEM, VEHICLE TREATMENT SYSTEM, USE OF A VEHICLE TREATMENT SYSTEM AND COMPUTER PROGRAM PRODUCT
PROCÉDÉ POUR FAIRE FONCTIONNER UNE INSTALLATION DE TRAITEMENT DE VÉHICULE, INSTALLATION DE TRAITEMENT DE VÉHICULE, UTILISATION D'UNE INSTALLATION DE TRAITEMENT DE VÉHICULE, ET PRODUIT-PROGRAMME D'ORDINATEUR

(30) Priorität: 29.05.2019 DE 102019114457
(43) Veröffentlichungstag der Anmeldung: 06.04.2022
(73) Patentinhaber: WashTec Holding GmbH, 86153 Augsburg (DE)
(72) Erfinder: HEINZ, Bernhard, 86368 Gersthofen (DE); FOERG, Oliver, 86199 Augsburg (DE); STECHER, David, 86653 Monheim (DE)
(74) Vertreter: Schwarz, Claudia
(86) Internationale Anmeldenummer: PCT/EP2020/064561
(87) Internationale Veröffentlichungsnummer: WO 2020/239757

(56) Entgegenhaltungen:
- EP-A2- 1 795 408
- WO-A1-2018/153845
- US-B1- 6 709 530

## Beschreibung

Die vorliegende Erfindung betrifft ein Verfahren zum Betreiben einer Fahrzeugbehandlungsanlage, eine Fahrzeugbehandlungsanlage, eine Verwendung einer Fahrzeugbehandlungsanlage sowie ein Computerprogrammprodukt.

Bürsten von Fahrzeugbehandlungsanlagen, insbesondere das Bürstenmaterial, mit dem Oberflächen von Fahrzeugen behandelt werden, zeigen im Verlauf ihres Gebrauchs Alterungs- und Verschleißerscheinungen.

Gemäß WO2018/153845 A1 werden Veränderungen der mechanischen Parameter einer rotierenden Behandlungsbürste mittels einer Referenzmessung an einem definierten Referenzelement erfasst, wofür die Behandlung unterbrochen wird. Das Referenzelement ist in der Fahrzeugbehandlungsanlage vorgesehen.

WO 2018/153845 A1 betrifft ein Verfahren zum Behandeln der Oberfläche eines Fahrzeugs, bei dem die Fahrzeugoberfläche mittels zumindest einer rotierenden Behandlungsbürste behandelt wird, wobei die Behandlungsbürste Behandlungselemente umfasst, deren Oberflächen bei der Behandlung mit der Fahrzeugoberfläche in reibenden Kontakt gebracht werden.

EP 1 795 408 A2 betrifft eine Autowaschanlage mit mindestens einer zustellbaren rotierenden Behandlungsbürste und einem motorischen Drehantrieb, dessen Antriebsmotor als steuerbarer Wechselstrommotor mit einem Frequenzumrichter ausgebildet ist.

US 6,709,530 B1 betrifft ein Betriebsverfahren und eine Fahrzeugreinigungsanlage mit mindestens einer Behandlungseinrichtung, einer Steuereinheit und einer Einrichtung zur optischen Erfassung eines Fahrzeugs. Bei diesem Verfahren wird ein in die Anlage einfahrendes oder sich darin befindliches Fahrzeug durch ein Kamerasystem innerhalb der Fahrzeugreinigungsanlage optisch erfasst. Die Daten werden an der der Steuereinheit eingegeben, um eine oder mehrere Systemfunktionen zu steuern oder zu regeln. Die Daten können insbesondere zur Steuerung einer Einfahrhilfe oder der Behandlungseinrichtung verwendet werden, die Waschbürsten, Hochdruckdüsen, Trocknerdüsen usw. umfasst.

Aufgabe ist es, ein Verfahren zum Betreiben einer Fahrzeugbehandlungsanlage und eine Fahrzeugbehandlungsanlage anzugeben, die eine Überwachung des Zustands des Bürstenmaterials ermöglichen.

Diese Aufgabe wird gelöst durch ein Verfahren nach Anspruch 1, eine Fahrzeugbehandlungsanlage nach Anspruch 15, eine Verwendung derselben nach Anspruch 17 und ein Computerprogrammprodukt nach Anspruch 18.

Ein Aspekt der Erfindung betrifft ein Verfahren zum Betreiben einer Fahrzeugbehandlungsanlage, insbesondere Fahrzeugwaschanlage, bei dem mindestens eine Fahrzeugfläche mit mindestens einer rotierenden Bürste mit einem Bürstenmaterial bei einer Eintauchtiefe der Bürste behandelt wird, während der Behandlung der Fahrzeugfläche die rotierende Bürste ausgehend von einem Sollwert für die Reibung des Bürstenmaterials an der Fahrzeugfläche geregelt wird, wobei während der Behandlung der Fahrzeugfläche zur Ermittlung des Zustands des Bürstenmaterials die Eintauchtiefe der rotierenden Bürste an den damit behandelten Fahrzeugflächen bei dem Sollwert überwacht wird.

Auf diese Weise kann der Zustand des Bürstenmaterials einer Fahrzeugbehandlungsanlage dadurch ermittelt werden, dass Daten für die Eintauchtiefe der rotierenden Bürste im Behandlungsprozess aufgezeichnet und überwacht werden. Eine Referenzmessung an einem speziell dafür vorgesehenen Referenzkörper ist nicht erforderlich. Auch muss für die Ermittlung des Zustands des Bürstenmaterials der Behandlungsprozess oder ein Zyklus von Behandlungsprozessen nicht unterbrochen werden. Ferner wird für die Ermittlung des Zustands des Bürstenmaterials keine speziell dafür vorgesehene Sensorik benötigt.

In einer Ausführungsform des Verfahrens werden die Daten für mindestens ein Element ausgewählt aus der Eintauchtiefe der Bürste und des Zustands des Bürstenmaterials während der Behandlung der Fahrzeugfläche gewonnen. Die Auswertung der Daten kann deshalb während und/oder nach dem Behandlungsprozess erfolgen. Gleiches gilt für die Ermittlung des Bürstenzustands. Eine Referenzmessung an einem speziell dafür vorgesehenen Referenzkörper ist nicht erforderlich, da die Daten während der Behandlung des Fahrzeugs gewonnen werden.

Im Verfahren kann während der Behandlung zur Kompensation eines sich verändernden Zustands, insbesondere eines sich verringernden Qualitätszustands, des Bürstenmaterials der Sollwert für die Reibung entsprechend angepasst, insbesondere verringert, werden. Es kann somit eine adaptive Anpassung des Sollwerts erfolgen. Dadurch kann die Anzahl von Serviceeinsätzen zur Überwachung des Bürstenzustands und zur Anpassung des Sollwerts deutlich verringert werden.

Die Eintauchtiefe der Bürste kann ferner während mindestens einer Behandlung und/oder einer Abfolge von Behandlungen von Fahrzeugflächen überwacht werden. So wird die Betriebssicherheit der Fahrzeugwaschanlage gefördert und Fahrzeugschäden werden vermieden.

Im Verfahren weiterer Ausführungsformen kann durch die Anpassung des Sollwerts für die Reibung die Eintauchtiefe im Wesentlichen konstant gehalten werden. So kann eine sich allmählich erhöhende Eintauchtiefe der Bürste kompensiert werden.

Ferner kann die Anpassung des Sollwerts für die Reibung schrittweise und/oder bei Erreichen eines Grenzwerts der Eintauchtiefe, insbesondere eines oberen Grenzwerts der Eintauchtiefe, durchgeführt werden. Dies ermöglicht eine zuverlässige und betriebssichere Kompensation der Eintauchtiefe und somit eines sich verändernden Bürstenzustands.

In Ausführungsformen des Verfahrens kann ferner mindestens ein Element ausgewählt aus der überwachten Eintauchtiefe, den Daten für die Eintauchtiefe und den Daten für den Zustand des Bürstenmaterials während der Behandlung oder während der Abfolge von Behandlungen der Fahrzeugflächen gespeichert und statistisch gemittelt werden. Dadurch können einzelne Ausreißer in den Messdaten, z.B. eine erhöhte Reibung aufgrund einer besonderen Kontur, z.B. aufgrund von Anbauteilen, eines behandelten Fahrzeugs, gemittelt werden.

Außerdem kann mindestens ein Schritt ausgewählt aus der Überwachung der Eintauchtiefe und der Anpassung des Sollwerts für die Reibung automatisch erfolgen. Dadurch kann die Anzahl von Serviceeinsätzen zur Überwachung des Bürstenzustands und zur Anpassung des Sollwerts besonders effizient verringert werden.

Bei dem Verfahren von Ausführungsformen kann die mindestens eine Fahrzeugfläche eine oder mehrere Fahrzeugflächen eines oder mehrerer Fahrzeuge, insbesondere eine Fahrzeugfläche gleichen Typs mehrerer Fahrzeuge, sein. Die mindestens eine Fahrzeugfläche kann ferner ausgewählt sein aus einer Dachfläche, einer Frontfläche, einer Heckfläche, einer oder mehrerer Seitenflächen und einer Kombination davon. Es können zudem die Fahrzeugflächen einer Mehrzahl von Fahrzeugen, insbesondere einer Mehrzahl von Fahrzeugen unterschiedlichen Typs, behandelt werden. Beispielsweise können im Verlauf einer Abfolge von Behandlungen die Dachflächen mehrerer Fahrzeuge, z.B. Fahrzeuge unterschiedlichen Typs, mit einer Dachbürste behandelt werden und der Zustand des Bürstenmaterials kann anhand der dabei festgestellten Eintauchtiefe der Dachbürste ermittelt werden.

Im Verfahren gemäß Ausführungsformen kann die Bürste mittels einer Leistungsaufnahme eines Rotationsantriebs der Bürste geregelt werden und als Sollwert für die Reibung kann die Leistungsaufnahme des Rotationsantriebs bei einer bekannten Eintauchtiefe der Bürste verwendet werden. So kann die Wirkleistung als Indikator für den Zustand des Bürstenmaterials genutzt werden. Zu Beginn der Behandlung und/oder der Abfolge von Behandlungen kann ferner ein Anfangswert des Sollwerts für die Reibung durch Verfahren der rotierenden Bürste in eine Position einer bekannten Eintauchtiefe relativ zu einer Fahrzeugfläche mit bekannter Position ermittelt werden. Auf diese Weise kann die Bürste bzw. der Zustand ihres Behandlungs- und/oder Bürstenmaterials kalibriert werden.

Zur Überwachung und/oder Ermittlung der Eintauchtiefe können die Position der Bürste und die Position der damit behandelten Fahrzeugfläche verglichen werden. Ferner können die Position der Bürste und die Position der damit behandelten Fahrzeugfläche bei bekannten, zur Längserstreckung der Bürste parallelen und/oder senkrechten Abmessungen der behandelten Fahrzeugfläche verglichen werden. Des Weiteren kann die Eintauchtiefe unter Berücksichtigung mindestens eines Elementes ausgewählt aus einer Eintauchbreite der rotierenden Bürste, eines Neigungswinkels der Bürste und eines Neigungswinkels der behandelten Fahrzeugfläche überwacht und/oder ermittelt werden. Auf diese Weise können Veränderungen der Eintauchtiefe und damit des Zustands der Bürste ohne zusätzlichen Referenzkörper und/oder ohne zusätzliche Sensorik festgestellt werden.

Im Verfahren gemäß Ausführungsformen können ferner zur Ermittlung der Position einer oder mehrerer Fahrzeugflächen die Fahrzeuglänge, die Fahrzeughöhenkontur und/oder die Fahrzeugbreite bestimmt werden. Hierfür kann in der Behandlungsanlage bereits vorhandene Sensorik verwendet werden. Mindestens ein Element ausgewählt aus der Position einer oder mehrerer der Fahrzeugflächen, der Fahrzeuglänge, der Fahrzeughöhenkontur und/oder der Fahrzeugbreite können während der Behandlung der Fahrzeugflächen bestimmt werden. Eine Unterbrechung der Behandlung oder eines Behandlungszyklus ist daher zu diesem Zweck nicht erforderlich.

Ferner können im Verfahren die Fahrzeuglänge und/oder die Fahrzeughöhenkontur mittels Sensoren bestimmt werden. Die Fahrzeugbreite kann gemäß Ausführungsformen des Verfahrens dadurch bestimmt werden, dass ein zu erwartender Sollwert für die Reibung mindestens einer rotierenden Seitenbürste bei einer bekannten Eintauchtiefe der Seitenbürste an einer Front- oder Heckfläche des Fahrzeugs ermittelt wird, mit der so kalibrierten Seitenbürste an Seitenflächen des Fahrzeugs der zu erwartenden Sollwert eingestellt wird und aus der bekannten Eintauchtiefe und der Position der Seitenbürste die Position der Seitenflächen ermittelt wird.

In weiteren Ausführungsformen des Verfahrens kann die Bürste schwingend oder in einem festen oder einstellbaren Neigungswinkel gehalten werden. Dabei kann der Neigungswinkel der Bürste ermittelt werden, insbesondere mittels eines Winkelsensors. Außerdem kann der Neigungswinkel der Front-, Heck- und/oder Seitenflächen aus dem Neigungswinkel einer Seitenbürste abgeleitet werden.

Bei der Erstinbetriebnahme der Fahrzeugbehandlungsanlage können mit einem der vorstehenden Verfahren von Ausführungsformen Grundparameter der Bürsten der Anlage automatisch angelernt werden. Vor der Erstinbetriebnahme kann zudem die Höhenkontur des Fahrzeugs durch Lichtschranken des Dachtrockners aufgenommen werden.

Im Verfahren nach Ausführungsformen kann während der Anpassung des Sollwerts bei einem unteren Grenzwert des Sollwerts, insbesondere bei einem Mindestwert für die Leistungsaufnahme des Rotationsantriebs der Bürste, eine Meldung an einen Bediener, insbesondere automatisch, ausgegeben werden. Dies kann als Alarmfunktion eingesetzt werden, die einen besonders abgenutzten Zustand des Bürstenmaterials anzeigt.

Ein weiterer Aspekt der Erfindung betrifft eine Fahrzeugbehandlungsanlage, insbesondere Fahrzeugwaschanlage, umfassend mindestens eine Bürste mit einem Bürstenmaterial zum Behandeln von Fahrzeugflächen. Die Bürste ist rotierbar gelagert und in eine Fahrzeugbehandlungsposition bei einer Eintauchtiefe der Bürste an einer zu behandelnden Fahrzeugfläche verfahrbar. Die Fahrzeugbehandlungsanlage umfasst ferner eine Bürstenverfahrvorrichtung zum Verfahren der Bürste in Positionen relativ zur zu behandelnden Fahrzeugfläche; einen Bürstenrotationsantrieb; einen Sensor zur Ermittlung einer Reibung des Bürstenmaterials an der zu behandelnden Fahrzeugfläche, insbesondere einen Leistungsaufnahmesensor des Rotationsantriebs; eine Einrichtung zum Ermitteln der Position einer oder mehrerer der Fahrzeugflächen; und eine datenverarbeitende Speicher- und Steuereinheit. Die Speicher- und Steuereinheit ist datenleitend mit mindestens einer Einheit ausgewählt aus der Bürstenverfahrvorrichtung, dem Bürstenrotationsantrieb, dem Sensor zur Ermittlung einer Reibung des Bürstenmaterials an der zu behandelnden Fahrzeugfläche und der Einrichtung zum Ermitteln der Position einer oder mehrerer der Fahrzeugflächen verbunden. Die Speicher- und Steuereinheit ist zum Speichern von diesen Einheiten empfangener Daten ausgebildet. Die Speicher- und Steuereinheit ist zum Steuern des Verfahrens nach einer der Ausführungsformen ausgebildet.

Gemäß Ausführungsformen der Fahrzeugbehandlungsanlage kann mindestens ein Element ausgewählt aus der Bürste, der Bürstenverfahrvorrichtung und dem Bürstenrotationsantrieb mittels der Speicher- und Steuereinheit regelbar sein. Ferner kann in der Speicher- und Steuereinheit ein Programm, insbesondere ein Computerprogramm, implementiert sein, das dazu ausgelegt ist, die Speicher- und Steuereinheit und/der die Fahrzeugbehandlungsanlage dazu zu veranlassen, ein Verfahren nach einer der vorstehenden Ausführungsformen auszuführen.

Ein anderer Aspekt der Erfindung betrifft eine Verwendung einer Fahrzeugbehandlungsanlage nach einer der vorgenannten Ausführungsformen zum Ausführen eines Verfahrens nach einer der vorgenannten Ausführungsformen.

Weitere Aspekte der Erfindung betreffen ein Computerprogrammprodukt, umfassend Programmelemente, die einen Server oder einen Computer oder eine Ausführungseinheit, insbesondere eine Speicher- und Steuereinheit einer Fahrzeugbehandlungsanlage nach einer der vorstehenden Ausführungsformen und/oder eine Fahrzeugbehandlungsanlage nach einer der vorstehenden Ausführungsformen, dazu veranlassen, das Verfahren nach einer der vorgenannten Ausführungsformen auszuführen, wenn die Programmelemente in einen Speicher des Servers oder des Computers oder der Ausführungseinheit, insbesondere in die Speicher- und Steuereinheit der Fahrzeugbehandlungsanlage, geladen werden. Ausführungsformen stellen ein entsprechendes Computerprogramm und/oder ein computerlesbares Medium bereit, auf dem das Computerprogramm gespeichert ist. Der Server, Computer oder die Ausführungseinheit können mit der Fahrzeugbehandlungsanlage drahtgebunden oder drahtlos verbunden und/oder darin integriert sein.

In den vorgenannten Ausführungsformen der Fahrzeugbehandlungsanlage und/oder des Computerprogrammprodukts und/oder des Computerprogramms können entsprechende Modifikationen implementiert sein wie in den oben erläuterten Ausführungsformen des Verfahrens zum Betreiben einer Fahrzeugbehandlungsanlage und diese können die gleichen vorteilhaften Wirkungen ermöglichen wie die oben erläuterten Ausführungsformen des Verfahrens mit entsprechenden Merkmalen.

In der folgenden detaillierten Figurenbeschreibung werden weitere, nicht einschränkend zu verstehende Ausführungsbeispiele mit deren Merkmalen und weiteren Vorteilen anhand der Figuren erläutert. Alle hier beschriebenen und sich nicht gegenseitig ausschließenden Merkmale oder Verfahrensschritte von Ausführungsformen können miteinander kombiniert werden. Gleiche Elemente der Ausführungsformen sind in der folgenden Beschreibung mit den gleichen Bezugszeichen versehen. Elemente einer Ausführungsform können in den anderen Ausführungsformen genutzt werden ohne weitere Erwähnung.

### Kurze Beschreibung der Figuren

- Fig. 1a: zeigt schematisch eine Frontalansicht einer Ausführungsform der erfindungsgemäßen Fahrzeugbehandlungsanlage nach dem Einfahren eines Fahrzeugs;
- Fig. 1b: zeigt schematisch die Anlage der Fig. 1a während einer Behandlung gemäß einer Ausführungsform des erfindungsgemäßen Verfahrens;
- Fig. 2a: zeigt schematisch eine weitere Ausführungsform der Fahrzeugbehandlungsanlage nach dem Einfahren des Fahrzeugs;
- Fig. 2b und 2c: zeigen schematisch die Anlage der Fig. 2a während einer Behandlung gemäß einer Ausführungsform des Verfahrens; und
- Fig. 3: zeigt schematisch eine Abwandlung der Anlage und des Verfahrens der Fig. 2a bis 2c.

### Detaillierte Beschreibung der Erfindung

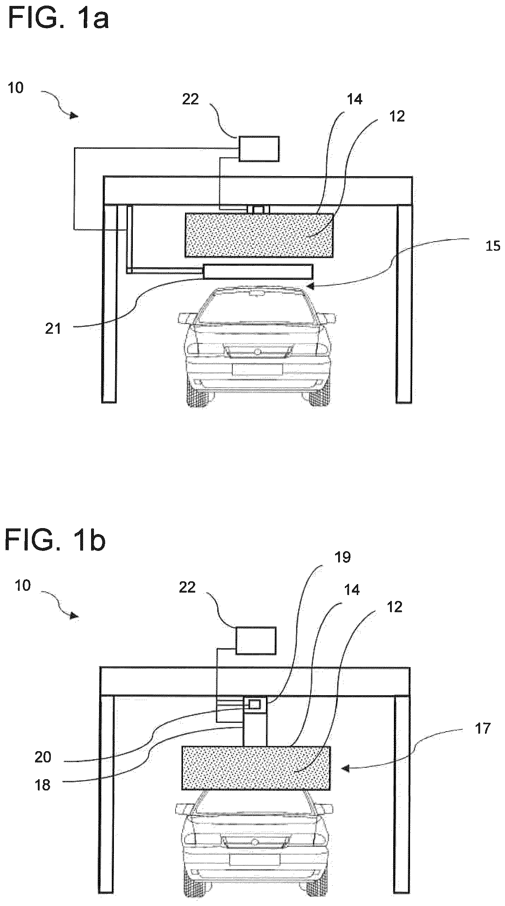

Die in den Figuren 1a bis 3 dargestellten Ausführungsformen und Beispiele der Fahrzeugbehandlungsanlage und des damit ausgeführten Verfahrens sind anhand einer Portalbehandlungsanlage, z.B. einer Portalwaschanlage, beschrieben. Die Erfindung ist jedoch nicht darauf beschränkt und kann in jeder Ausführungsform analog abgewandelt beispielsweise auch mit einer Behandlungsstraße, z.B. einer Waschstraße, realisiert werden.

Bei der Behandlung einer Fahrzeugfläche mit einer rotierenden Bürste wird die behandelte Fahrzeugfläche in das behandelnde Bürstenmaterial eingetaucht. Dies führt zu einer Eintauchtiefe und ggf. zu einer Eintauchbreite der Bürste bei der Behandlung. Die Eintauchtiefe der Bürste wird vorliegend in Bezug auf den Abstand der Bürstenrotationsachse zur behandelten Fahrzeugfläche verstanden, bei dem die rotierende Bürste während der Behandlung zu liegen kommt. Wenn sich die Rotationsachse der Bürste an die Fahrzeugfläche bei der Behandlung annähert, also wenn der Abstand der Rotationsachse zur Fahrzeugfläche geringer wird, wird die Eintauchtiefe größer. Die Eintauchbreite einer Bürste wird vorliegend verstanden als die Abmessung parallel zu der Rotationsachse der Bürste, mit der die Fahrzeugfläche in das Bürstenmaterial eintaucht. Die Eintauchbreite einer Seitenbürste wird in Beispielen auch als Eintauchhöhe bezeichnet.

Fig. 1a zeigt schematisch ein Beispiel der erfindungsgemäßen Fahrzeugbehandlungsanlage (im Folgenden auch Anlage genannt) 10 nach dem Einfahren eines zu behandelnden Fahrzeugs, in Frontalansicht. Fig. 1b stellt die Anlage 10 im Betrieb dar. Das Fahrzeug besitzt eine Dachfläche 15.

In der Anlage 10 ist ein Rahmen mit einer Traverse vorgesehen, an der eine im Wesentlichen horizontal ausgerichtete Dachbürste 14 mit einem Bürstenmaterial 12 zum Behandeln von Fahrzeugflächen mittels einer Aufhängung 13 angeordnet ist. Das Bürstenmaterial 12 besteht vorliegend aus Borsten, beispielsweise aus Polyethylen(PE)-Schaumstoff, PE-Filamenten oder Polypropylen(PP)-Filz. Die Bürste ist an der Aufhängung 13 rotierbar gelagert und in eine Fahrzeugbehandlungsposition 17 bei einer Eintauchtiefe der Bürste an der Dachfläche 15 absenkbar, wie in Fig. 1b veranschaulicht. Hierzu umfasst die Aufhängung 13 der Fahrzeugbehandlungsanlage 10 eine Bürstenverfahrvorrichtung 18 zum Absenken der Bürste in Positionen relativ zur Dachfläche 15. Die Aufhängung 13 umfasst ferner ein Bürstenrotationsantrieb 19, um die Bürste beim Behandlungsvorgang in Rotation zu versetzen. Der Bürstenrotationsantrieb 19 besitzt einen Leistungsaufnahmesensor 20. Letzterer dient im vorliegenden Beispiel als Sensor zur Ermittlung einer Reibung des Bürstenmaterials 12 an der zu behandelnden Dachfläche 15.

Die Anlage 10 besitzt zudem einen Dachtrockner 21 (nur in Fig. 1a gezeigt), der vorliegend als Einrichtung zum Ermitteln der Position der Dachfläche eingesetzt wird. Der Dachtrockner 21, bzw. dessen Lichtschranken dient/dienen zur Höhenkonturerfassung des Fahrzeugs, die zu Beginn der Behandlung des Fahrzeugs erfolgen kann. Es kann zusätzlich oder alternativ auch die 3D-Kontur des Fahrzeugs ermittelt werden. Für die Erfassung der Höhenkontur und/oder der 3D-Kontur können zusätzlich oder alternativ zum Dachtrockner ein Bilderfassungsgerät, Lichtschranken oder Lichtgitter, und/oder Radar- oder Ultraschallsensoren als Einrichtung zum Ermitteln der Position und Abmessungen der Fahrzeugflächen, hier insbesondere der Dachfläche, vorgesehen sein.

Die Anlage 10 umfasst ferner eine datenverarbeitende Speicher- und Steuereinheit 22. Die Speicher- und Steuereinheit 22 ist datenleitend mit der Bürstenverfahrvorrichtung 18, dem Bürstenrotationsantrieb 19, dem Sensor 20 zur Ermittlung einer Reibung des Bürstenmaterials an der Dachfläche und dem Dachtrockner 21 verbunden. Von diesen Einheiten übermittelte und/oder empfangene Daten sind und/oder werden in der Speicher- und Steuereinheit 22 gespeichert und verarbeitet. Die Speicher- und Steuereinheit 22 ist zum Steuern des Verfahrens nach einer der Ausführungsformen ausgebildet. Hierfür ist/sind in der Speicher- und Steuereinheit 22 ein Programm und/oder Steuerbefehle implementiert, das/die dazu ausgelegt ist/sind, ein Verfahren gemäß einer der Ausführungsformen auszuführen und/oder zu steuern. Das Programm kann durch ein Computerprogrammprodukt oder Computerprogramm implementiert sein/werden, dessen Programmelemente die Speicher- und Steuereinheit 22 und die Anlage 10 dazu veranlassen, ein Fahrzeugbehandlungsverfahren auszuführen, wenn die Programmelemente in die Speicher- und Steuereinheit 22 geladen sind/werden. Die Bürstenverfahrvorrichtung 18 und der Bürstenrotationsantrieb 19 sind mittels der Speicher- und Steuereinheit 22 regelbar.

In einem beispielhaften Betrieb der Anlage 10 wird vor der Behandlung die Höhenkontur des Fahrzeugs mit dem Dachtrockner 21 abgefahren und die Höhenkonturdaten werden in der Speicher- und Steuereinrichtung 22 gespeichert.

Dann wird für die Behandlung der Dachfläche 15 die Dachbürste 14 mit dem Antrieb 19 in Rotation versetzt. Die rotierende Dachbürste 14 wird in Richtung der Dachfläche 15 durch die Bürstenverfahrvorrichtung 18 soweit abgesenkt, bis das Bürstenmaterial 12 mit einer Eintauchtiefe an der Dachfläche 15 positioniert ist. In einer alternativen Betriebsweise kann die Bürste auch nach dem Absenken in Rotation versetzt werden. Die Dachfläche 15 wird nun mit dem Bürstenmaterial 12 bei der gewünschten Eintauchtiefe der Bürste behandelt.

Während der Behandlung der Dachfläche 15 wird die rotierende Dachbürste 14 ausgehend von einem Sollwert für die Reibung des Bürstenmaterials 12 an der Dachfläche entlanggeführt und geregelt. Der Sollwert der Reibung kann beispielsweise von einer Herstellerangabe für das Bürstenmaterial 12 abgeleitet werden, die eine Orientierung gibt, welche Werte für die Reibung bzw. für die Wirkleistung des Bürstenrotationsantriebs, bei verschiedenen Abmessungen des behandelnden Bürstenkörpers der rotierenden Bürste parallel zu ihrer Rotationsachse, bei welcher Eintauchtiefe des ungebrauchten Bürstenmaterials zu erwarten sind. Diese Werte werden im vorliegenden Beispiel in der Speicher- und Steuereinrichtung 22 mit der Leistungsaufnahme des Bürstenrotationsantriebs 19 in Korrelation gesetzt. Auf diese Weise wird ein Sollwert für die Leistungsaufnahme, der der gewünschten Eintauchtiefe entspricht, als Sollwert für die Reibung bestimmt und gespeichert. Für die Regelung erfasst der Leistungsaufnahmesensor 20 des Bürstenrotationsantriebs 19 einen Ist-Wert der Leistungsaufnahme. Dieser wird in der Speicher- und Steuereinrichtung 22 mit dem gespeicherten Sollwert verglichen. Die Speicher- und Steuereinrichtung 22 verändert die Steuerbefehle für den Antrieb 19 der Bürste entsprechend, um eine Angleichung an den Sollwert und dessen Einhaltung zu bewirken.

Im Verlauf der Behandlung der Dachfläche 15 wird die Eintauchtiefe der rotierenden Bürste 14 an der Dachfläche 15 mittels der Speicher- und Steuereinrichtung 22 kontinuierlich oder diskontinuierlich überwacht, während der Sollwert für die Leistungsaufnahme im Wesentlichen eingehalten wird, bevorzugt unter Berücksichtigung der Abmessung(en) der Dachfläche parallel zur Rotationsachse der Bürste, z.B. der Dachbreite. Hierfür wird die aus der Steuerung bekannte Position der Dachbürste 14 mit der aus der Höhenkonturerfassung bekannten Position der Dachfläche 15 verglichen. Solange die Eintauchtiefe im Verlauf der Behandlung im Wesentlichen gleich bleibt, wird ein guter Zustand des Bürstenmaterials ermittelt. Ein guter Zustand wird in diesem Beispiel mit einem nicht verschlissenen Bürstenmaterial gleichgesetzt. Wird die Eintauchtiefe im Verlauf der Behandlungen höher, wird ein sich verschlechternder Zustand des Bürstenmaterials ermittelt, z.B. aufgrund von Verschleiß.

Mit dem Verfahren wie oben beschrieben ist für die Ermittlung des Zustands des Bürstenmaterials keine Referenzmessung an einem in oder außerhalb der Anlage speziell dafür vorgesehenen Referenzkörper erforderlich. Ferner muss in der Anlage 10 für die Ermittlung des Zustands des Bürstenmaterials keine zusätzliche Messtechnik und/oder Sensorik vorgesehen sein.

Gemäß einer Abwandlung des Verfahrens des vorstehenden Beispiels wird während der Behandlung zur Kompensation eines sich verändernden Zustands des Bürstenmaterials der Sollwert für die Reibung entsprechend angepasst. Insbesondere bei Ermittlung eines sich verringernden Qualitätszustands des Bürstenmaterials, wie eines Verschleißes, kann der Sollwert für die Reibung, im vorstehenden Beispiel der Sollwert für die Leistungsaufnahme, verringert werden. Auf diese Weise kann die Eintauchtiefe der Bürste im Wesentlichen konstant gehalten werden, um so die Betriebssicherheit zu fördern und Fahrzeugschäden zu vermeiden. Ferner kann die Anpassung des Sollwerts für die Reibung schrittweise und/oder bei Erreichen eines oberen Grenzwerts der Eintauchtiefe durchgeführt werden. Es kann so eine adaptive Anpassung des Sollwerts durchgeführt werden, um eine zuverlässige und betriebssichere Kompensation einer zunehmenden Eintauchtiefe und eines sich verändernden Bürstenzustands zu ermöglichen.

Im Verfahren weiterer Ausführungsformen wird während der Anpassung des Sollwerts bei einem unteren Grenzwert des Sollwerts, insbesondere bei einem Mindestwert für die Leistungsaufnahme des Rotationsantriebs der Bürste, eine Meldung an einen Bediener, insbesondere automatisch, ausgegeben. Dies kann als Alarmfunktion eingesetzt werden, die einen besonders abgenutzten Zustand des Bürstenmaterials anzeigt.

In weiteren Beispielen des Verfahrens werden die Daten für die Eintauchtiefe während mindestens einer Behandlung einer Fahrzeugfläche oder während einer Abfolge von Behandlungen von Fahrzeugflächen ermittelt, gespeichert und/oder statistisch gemittelt. Beispielsweise werden mehrere aufeinanderfolgende Behandlungen gemäß dem Beispiel der Fig. 1a und 1b an mehreren Fahrzeugen ausgeführt. Dabei werden jeweils die Dachflächen der Fahrzeuge behandelt und anhand des Verhaltens der Dachbürste 14 wird der Zustand des Bürstenmaterials ermittelt. Dies kann auch für Fahrzeugbehandlungsanlagen gelten, in denen zusätzlich zur Dachbürste weitere Bürsten gleichen Materials eingesetzt werden. Die Dachbürste kann so als Referenzbürste dienen. Die Fahrzeuge können auch unterschiedlichen Typs sein. Insbesondere im Falle einer längeren Abfolge von Behandlungen können einzelne Ausreißer in den Messdaten, z.B. eine erhöhte Reibung aufgrund einer besonderen Kontur eines behandelten Fahrzeugs, durch die statistische Mittelung eliminiert werden. Außerdem können die Überwachung der Eintauchtiefe und/oder die Anpassung des Sollwerts für die Reibung automatisch erfolgen. Dadurch kann die Anzahl von Serviceeinsätzen zur Überwachung des Bürstenzustands und zur manuellen Anpassung des Sollwerts effizient verringert werden.

Wie beschrieben wird im Verfahren des Beispiels der Fig. 1a und 1b die Bürste mittels einer Leistungsaufnahme eines Rotationsantriebs der Bürste geregelt und als Sollwert für die Reibung wird ein Wert für die Leistungsaufnahme des Rotationsantriebs bei einer bekannten Eintauchtiefe der Bürste verwendet. So wird die Wirkleistung als Indikator für den Zustand des Bürstenmaterials genutzt. Zu Beginn der Behandlung kann ferner alternativ zu oder in Kombination mit einem aus einer Herstellerangabe abgeleiteten Sollwert ein Anfangswert des Sollwerts für die Reibung durch Verfahren der rotierenden Bürste in eine Position einer bekannten Eintauchtiefe relativ zu einer Fahrzeugfläche mit bekannter Position ermittelt werden. Auf diese Weise kann die Bürste bzw. der Zustand des Bürstenmaterials kalibriert werden.

Das Verfahren des Beispiels der Fig. 1a und 1b kann statt mit der Dachbürste oder zusätzlich zur Dachbürste analog auch für eine oder mehrere andere Bürsten einer Fahrzeugbehandlungsanlage, wie eine oder mehrere Seitenbürsten, durchgeführt werden.

Im Verfahren des Beispiels der Fig. 1a und 1b werden zur Überwachung und/oder Ermittlung der Eintauchtiefe die Position der Bürste und die Position der damit behandelten Fahrzeugfläche verglichen. Zusätzlich oder alternativ können die Position der Bürste und die Position der damit behandelten Fahrzeugfläche(n) unter Berücksichtigung von bekannten, zur Längserstreckung der Bürste parallelen und/oder senkrechten Abmessungen der behandelten Fahrzeugfläche(n) verglichen werden. Diese Abmessungen wie auch die Position der Bürste können mittels in der Anlage 10 vorhandenen Sensoren bestimmt werden. Auf diese Weise können Veränderungen der Eintauchtiefe aufgrund unterschiedlicher Abmessungen der behandelten Fahrzeugflächen und/oder aufgrund unterschiedlicher Eintauchbreiten/Eintauchhöhen der Bürste zuverlässig ohne zusätzlichen Referenzkörper und/oder ohne zusätzliche Sensorik festgestellt und berücksichtigt werden. In Ausführungsformen kann die Längserstreckung der Bürste der Erstreckung der Bürste parallel zu deren Rotationsachse entsprechen.

Beispielsweise können zur Ermittlung der Abmessungen und/oder Position einer oder mehrerer Fahrzeugflächen die Fahrzeuglänge, die Fahrzeughöhenkontur und/oder die Fahrzeugbreite bestimmt werden. Hierfür kann in der Behandlungsanlage 10 bereits vorhandene Sensorik und Messgeräte verwendet werden und deren Messungen abgeglichen werden. Als Sensorik kann z.B. ein Bilderfassungsgerät, Lichtschranken oder Lichtgitter, und/oder Radar- oder Ultraschallsensoren eingesetzt werden. Daher können die Positionen einer oder mehrerer der Fahrzeugflächen, die Fahrzeuglänge, die Fahrzeughöhenkontur und/oder die Fahrzeugbreite während der Behandlung der Fahrzeugflächen bestimmt werden, ohne Unterbrechung der Behandlung oder eines Behandlungszyklus.

In weiteren Ausführungsformen der Fahrzeugbehandlungsanlage und/oder des Verfahrens kann der Zustand des Bürstenmaterials alternativ oder zusätzlich auch anhand anderer Bürsten als der Dachbürste, wie z. B. mittels einer Seitenbürste ermittelt werden.

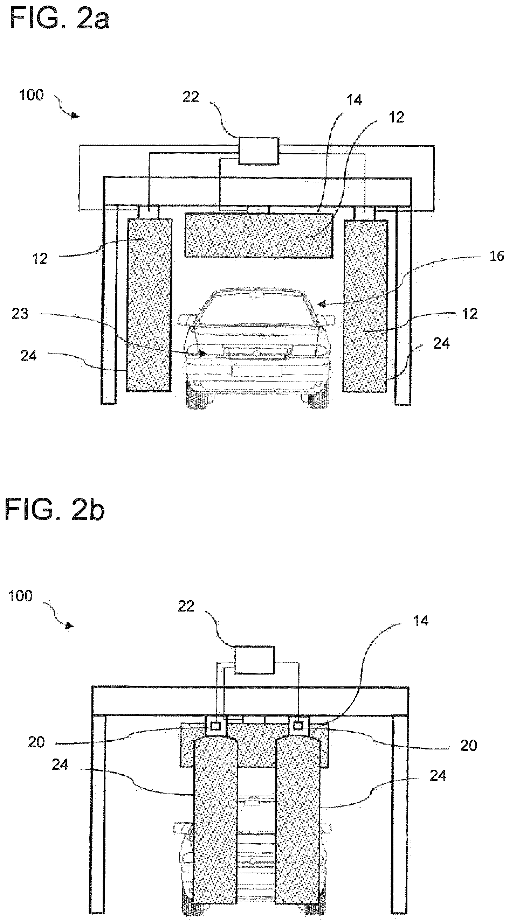

Fig. 2a bis 2c zeigen als ein weiteres Beispiel eine Fahrzeugbehandlungsanlage 100 mit einer Dachbürste 14 und zwei Seitenbürsten 24, die analog der Dachbürste 14 ausgebildet sind. Fig. 2a zeigt die Anlage 100 nach dem Einfahren eines Fahrzeugs mit einer Frontfläche 23, einer Dachfläche 15 und zwei Seitenflächen 16 in Frontalansicht. Die Speicher- und Steuereinheit 22 ist sowohl mit der Dachbürste 14 als auch mit den Seitenbürsten 24 verbunden, zum Zwecke der Steuerung und Regelung auch der Seitenbürsten. Die Seitenbürsten 24 umfassen jeweils, wie die Dachbürste 14, eine Bürstenverfahrvorrichtung, einen Bürstenrotationsantrieb, und einen Sensor zur Ermittlung einer Reibung des Bürstenmaterials (jeweils in Fig. 2a bis 2c nicht gezeigt). Mit diesen ist die Speicher- und Steuereinheit 22 datenleitend verbunden, um von diesen Einheiten übermittelte und/oder empfangene Daten zu speichern und zu verarbeiten.

In einem beispielhaften Betrieb der Anlage 100 erfolgt eine Behandlung der Seitenflächen 16 mit den Seitenbürsten 24 analog zu der Behandlung der Dachfläche 15 mit der Dachbürste 14, wie unter Bezugnahme auf Fig. 1a und 1b beschrieben. Dabei wird während der Behandlung der Fahrzeugfläche zur Ermittlung des Zustands des Bürstenmaterials die Eintauchtiefe der rotierenden Seitenbürsten 24 an den damit behandelten Fahrzeugflächen bei dem Sollwert überwacht.

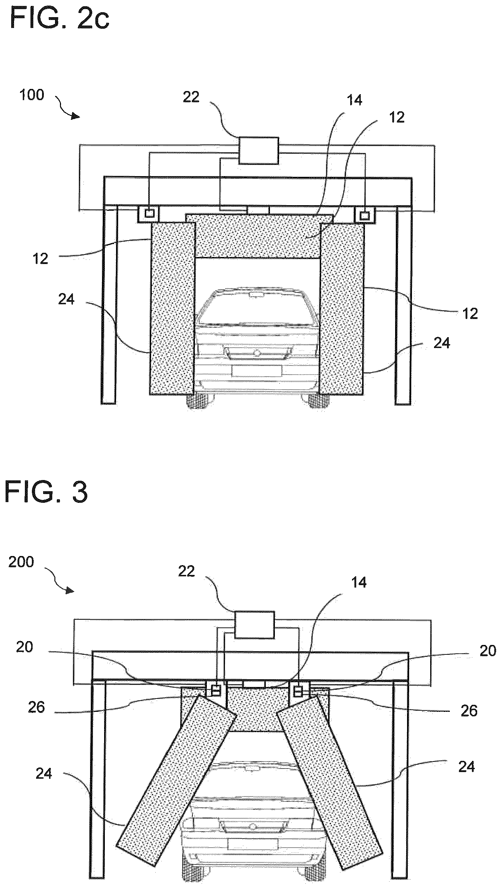

In einem Beispiel wird in der Fahrzeugbehandlungsanlage 100 zuerst eine anfängliche Konturerfassung des in die Anlage eingefahrenen Fahrzeugs ausgeführt. Zu diesem Zweck erfolgt eine Überfahrt der Traverse mit einer Kamera über das Fahrzeug auf dessen ganzer Länge. Dadurch wird die Position der Dachfläche, der Frontfläche, der Heckfläche und der Seitenflächen des Fahrzeugs in der Anlage 100 ermittelt. Dann wird die Frontfläche 23 behandelt, durch Verschieben der Seitenbürsten 24 entlang der Traverse im Wesentlichen parallel zur Frontfläche und durch Entlangführen der Seitenbürsten an der Frontfläche 23, wie in Fig. 2b dargestellt. Danach werden die Seitenbürsten 24 durch Verschieben ihrer Aufhängung entlang der Traverse an die Seitenflächen 16 des Fahrzeugs herangefahren und während zur Behandlung der Seitenflächen 16 durch Verschieben der Traverse im Wesentlichen parallel zu den Seitenflächen 16 daran entlanggeführt, wie in Fig. 2c gezeigt. Während der Behandlung der jeweiligen Fahrzeugflächen wird zur Ermittlung des Zustands des Bürstenmaterials die Eintauchtiefe der rotierenden Seitenbürsten 24 an den damit behandelten Seitenflächen 16 bei dem Sollwert überwacht, analog zu dem Beispiel der Behandlung der Dachfläche 15 mit der Dachbürste 14 wie unter Bezugnahme auf Fig. 1a und 1b beschrieben. Darauf wird die Heckfläche entsprechend wie die Frontfläche 23 behandelt. Gleichzeitig wird die Dachfläche 15 mit der Dachbürste 14 behandelt, wie vorstehend unter Bezugnahme auf Fig. 1a und 1b beschrieben. Es ist auch eine andere Reihenfolge der Behandlungen der Fahrzeugflächen denkbar.

Gemäß einer Ausführungsform kann nach dem Einbau von Bürsten mit ungebrauchtem Bürstenmaterial in die Anlage 100 eine Anfangskalibration des Bürstenmaterials während der Behandlung erfolgen, wie im Folgenden für die Seitenbürsten beschrieben:
Es wird ein Sollwert für die Reibung der rotierenden Seitenbürste(n) 24 bei einer bekannten Eintauchtiefe der Seitenbürste(n) bestimmt. Hierfür werden die Seitenbürsten 24 in Rotation um ihre Drehachse (auch Rotationsachse genannt) versetzt. Dann werden die Seitenbürsten 24, durch Verschieben der Traverse und durch Verschieben der Aufhängung der Seitenbürsten entlang der Traverse, an die Frontfläche 23 des Fahrzeugs, deren Position durch Lichtschranken bekannt ist, herangefahren. Die ist in Fig. 2b schematisch dargestellt. Statt der Frontfläche kann auch eine andere Fahrzeugfläche bekannter Position genutzt werden.

Beim Heranfahren der Seitenbürsten 24 an die Frontfläche wird eine Herstellerangabe/Werksvorgabe für das Bürstenmaterial 12 berücksichtigt, die eine Orientierung gibt, welche Werte für die Reibung bzw. für die Wirkleistung des Bürstenrotationsantriebs bei welcher Abmessung des behandelnden rotierenden Bürstenkörpers, d.h. bei welcher Leistung welche Eintauchtiefe des ungebrauchten Bürstenmaterials 12 zu erwarten sind/ist. Die zu kalibrierende rotierende Seitenbürste 24 oder beide zu kalibrierende rotierenden Seitenbürsten 24 wird/werden in eine Position einer aus der Herstellerangabe bekannten und für das Behandlungsverfahren erwünschten Eintauchtiefe relativ zur Frontfläche 23, deren Höhe bekannt ist, bewegt. Die in dieser Position festgestellte Leistungsaufnahme des Rotationsantriebs der zu kalibrierenden Seitenbürste 24 wird als ein Anfangswert des Sollwerts für die Reibung in der Speicher- und Steuereinrichtung 22 unter Berücksichtigung der bekannten Höhe der Frontfläche als eine Eintauchhöhe der Seitenbürste gespeichert und im weiteren Behandlungsverfahren verwendet. Im Falle zweier zu kalibrierender Seitenbürsten 24 kann die festgestellte Leistungsaufnahme gemittelt werden. Auf diese Weise wird/werden die Seitenbürste(n) 24 mit dem ungebrauchten Bürstenmaterial kalibriert. Die Dachbürste 14 kann mit ungebrauchtem Bürstenmaterial auf analoge Weise kalibriert werden.

Falls aufgrund eines sich im Gebrauch verändernden Zustands des Bürstenmaterials eine Nachkalibrierung der jeweiligen Bürsten erwünscht ist, wird eine adaptive Anpassung des Sollwerts für die Reibung durchgeführt, wie oben in Bezug auf das Verfahren des Beispiels der Fig. 1a und 1b beschrieben.

Eine Bestimmung der Position von Fahrzeugflächen, z.B. ergänzend zur anfänglichen Konturerfassung, kann während der Behandlung des Fahrzeugs folgendermaßen durchgeführt werden, wie anhand der Fahrzeugbreite und der Position der Seitenflächen beschrieben wird:
Zunächst erfolgt in der Fahrzeugbehandlungsanlage 100 die anfängliche Konturerfassung des in die Anlage eingefahrenen Fahrzeugs, bei der unter anderem die Position und Höhe der Frontfläche des Fahrzeugs wie auch die Höhe der Seitenflächen in der Anlage 100 ermittelt wird. Im weiteren Verlauf der Behandlung wird mindestens eine Seitenbürste 24 an die Frontfläche herangefahren, wobei die Positionen der Seitenbürste und der Frontfläche bekannt sind. An der Frontfläche bekannter Höhe wird ein zu erwartender Sollwert für die Reibung bzw. Leistungsaufnahme der rotierenden Seitenbürste 24 bei einer gewünschten Eintauchtiefe der Seitenbürste, d.h. bei einem gewünschten Abstand zwischen Seitenbürste und Frontfläche (Eintauchtiefe), und bei einer der Höhe der Frontfläche entsprechenden Eintauchhöhe ermittelt. Mit der so kalibrierten mindestens einen rotierenden Seitenbürste 24 wird nun an den Seitenflächen 16 des Fahrzeugs jeweils der zu erwartende Sollwert unter Berücksichtigung der bekannten Höhe der Seitenflächen, d.h. der Eintauchhöhe, eingestellt. Aus der bekannten Eintauchtiefe und der bekannten Position der Seitenbürste werden dann die Fahrzeugbreite und die Position der Seitenflächen 16 ermittelt. Statt der Frontfläche kann zur Kalibrierung der Seitenbürste auch die Heckfläche (oder eine andere Fahrzeugfläche) bekannter Position genutzt werden. Aus der so ermittelten Fahrzeugbreite kann auch die Breite des Fahrzeugdaches abgeleitet werden.

In weiteren Ausführungsformen der Fahrzeugbehandlungsanlage und des Verfahrens ist/wird mindestens eine Seitenbürste schwingend oder in einem festen oder einstellbaren Neigungswinkel gehalten. Dies ist in Fig. 3 für die Seitenbürsten 24 schematisch dargestellt. Bei dem zugehörigen Verfahren kann der Neigungswinkel der jeweiligen Bürste bestimmt werden, insbesondere mittels eines Winkelsensors beispielsweise umfassend einen Magneten und einen Magnetfeldsensor. Außerdem kann der Neigungswinkel der Front-, Heck- und/oder Seitenflächen mittels Sensoren bestimmt und/oder aus dem Neigungswinkel einer Seitenbürste abgeleitet werden. Letzteres kann beispielsweise durch Heranfahren einer frei schwingend an einem Auslegerarm aufgehängten und rotierenden Seitenbürste an die zu behandelnde Fahrzeugfläche, Abstützen der Bürste an der Fläche und Bestimmen des so eingestellten Neigungswinkels der Bürste, der dem/den Neigungswinkel(n) der Fläche im Wesentlichen bzw. im Mittel entspricht, erfolgen. Der Neigungswinkel der Seitenbürsten und/oder der Seitenflächen können ferner im Rahmen der oben beschriebenen Ermittlung der Fahrzeugbreite auch für die Bestimmung der Breite der Dachfläche verwendet werden. Der Neigungswinkel der Bürste und/oder der damit behandelten Fahrzeugfläche kann im Verfahren zum Betreiben einer Fahrzeugbehandlungsanlage der vorstehenden Ausführungsformen für die Bestimmung des Sollwerts für die Reibung und/oder für die Ermittlung der Eintauchtiefe berücksichtigt werden. Es können ferner während der Behandlung geneigter Fahrzeugflächen die Bürsten im Wesentlichen parallel zu den Fahrzeugflächen orientiert werden, um eine im Wesentlichen gleichmäßige Eintauchtiefe parallel zu der Rotationsachse der Bürste zu erhalten.

Die Anlage 100 der Fig. 2a bis 2c und die Anlage 200 der Fig. 3 umfassen mehrere Seitenbürsten und eine Dachbürste, während die Anlage 10 der Fig. 1a und 1b nur eine Dachbürste besitzt. Alternativ können die in Bezug auf diese Figuren beschriebene Verfahren analog in einer Anlage mit einer oder mehreren Bürsten ausgewählt aus einer oder mehreren Dachbürsten, einer oder mehreren Seitenbürsten, und einer beliebigen Kombination davon ausgeführt werden.

Somit kann erfindungsgemäß bei einer Fahrzeugbehandlungsanlage, die z.B. mit Winkelsensoren, Leistungsmessung, Längenmessung und/oder Lichtschranken ausgestattet ist, eine Behandlungsbürste bzw. deren Zustand dadurch überwacht werden, dass Leistungs- und Positions-Daten im Behandlungsprozess aufgezeichnet werden und durch deren nachträgliche Auswertung der Bürstenzustand ermittelt wird. Die Daten können für eine größere Anzahl an Fahrzeugen gespeichert und statistisch gemittelt werden, um einzelne Ausreißer aufgrund ungewöhnlicher Fahrzeugkonturen zu eliminieren. Ab einer bestimmten Abweichung vom ursprünglichen Sollwert der Wirkleistung, die vorliegend als ein Maß für die Reibung der Bürste an der Fahrzeugfläche genutzt wird, kann bis zu einer vorgegebenen Grenze der Sollwert nachgestellt werden. Als Referenz zur Ermittlung des Sollwerts dienen die Fahrzeugflächen, deren Positionen durch Abgleich der unterschiedlichen Sensoren relativ genau ermittelt werden können.

In einem Beispiel wird die Fahrzeuglänge durch eine Querlichtschranke ermittelt, und die Fahrzeughöhenkontur wird durch Trocknergebläselichtschranken ermittelt. Durch die bekannte Front- und Heckposition und die bekannte Höhe von Front oder Heck kann wie oben beschrieben ein zu erwartender Sollwert der Wirkleistung für die Seitenbürste ermittelt werden, der bei einer bekannten Eintauchtiefe erreicht wird. Wird der Sollwert wie zu erwarten erreicht, kann mit hinreichender Sicherheit davon ausgegangen werden, dass sich die Seitenbürste an einer bekannten Position befindet. Dementsprechend kann mit der so kalibrierten Seitenbürste an der Seite des Fahrzeugs bei erreichtem Sollwert für die Wirkleistungsmessung die Position der beiden Fahrzeugseitenflächen bestimmt werden, aus der sich die Breite des Fahrzeugs und/oder des Fahrzeugdaches ableiten lässt, das die Referenzfläche für die Dachbürste darstellt. Durch Vergleich der durch den Dachtrockner erfassten Höhenkontur mit der Dachbürstenhöhe bei bekannter Breite des Fahrzeugs und/oder des Fahrzeugdaches und eingehaltenem Sollwert für die Leistungsaufnahme der Dachbürste kann ausgewertet werden ob das Bürstenmaterial an Steifigkeit verliert und der Sollwert entsprechend korrigiert werden. Gleiches gilt für den Abgleich der Seitenbürsten an Front und Heck des Fahrzeugs.

Bei der Erstinbetriebnahme der Fahrzeugbehandlungsanlage können mit einem der vorstehenden Verfahren von Ausführungsformen Grundparameter der Bürsten der Anlage automatisch angelernt werden. Vor der Erstinbetriebnahme kann zudem die Dachtrocknerkontur aufgenommen werden.

Durch die Fahrzeugbehandlungsanlage und das Verfahren zum Betreiben einer Fahrzeugbehandlungsanlage gemäß Ausführungsformen der Erfindung wird das Behandlungsergebnis verbessert, die Betriebssicherheit der Anlage wird erhöht und Fahrzeugschäden werden vermieden, da der Zustand des Bürstenmaterials zuverlässig überwacht werden kann. Insbesondere kann der Zustand des Bürstenmaterials der Fahrzeugbehandlungsanlage dadurch ermittelt werden, dass Daten für die Eintauchtiefe der rotierenden Bürste im Behandlungsprozess aufgezeichnet und überwacht werden. Eine Referenzmessung an einem speziell dafür vorgesehenen Referenzkörper ist nicht erforderlich. Ferner wird für die Ermittlung des Zustands des Bürstenmaterials keine speziell dafür vorgesehene Sensorik benötigt. Auch muss für die Ermittlung des Zustands des Bürstenmaterials und anderer Schritte des Verfahrens der Behandlungsprozess oder ein Zyklus von Behandlungsprozessen nicht unterbrochen werden. In einigen Ausführungsformen können alle oder zumindest eine Mehrzahl der Schritte des Verfahrens während der Behandlung der Fahrzeugfläche(n) durchgeführt werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Fahrzeugbehandlungsanlagen angewendet werden kann, sondern auch für andere Anlagen zur Behandlung von Gegenständen, beispielsweise von Flugzeugen. Des Weiteren können die Einrichtungen der Anlage 10, 100, 200 auf mehrere physikalische Vorrichtungen verteilt realisiert werden.

### BEZUGSZEICHEN

- 10/100/200: Vorrichtung zum Reinigen eines Fahrzeugs mit mindestens einer Außenfläche
- 12: Bürstenmaterial
- 13: Aufhängung
- 14: Dachbürste
- 15: Dachfläche
- 16: Seitenfläche
- 17: Fahrzeugbehandlungsposition
- 18: Bürstenverfahrvorrichtung
- 19: Bürstenrotationsantrieb
- 20: Sensor zur Ermittlung einer Reibung des Bürstenmaterials
- 21: Einrichtung zum Ermitteln der Position der Fahrzeugfläche
- 22: Speicher- und Steuereinheit
- 23: Frontfläche
- 24: Seitenbürste
- 26: Einrichtung zum Überwachen des Neigungswinkels der Reinigungsbürste

## Patentansprüche

1. Verfahren zum Betreiben einer Fahrzeugbehandlungsanlage, insbesondere Fahrzeugwaschanlage, bei dem
mindestens eine Fahrzeugfläche (15; 16) mit mindestens einer rotierenden Bürste (14; 24) mit einem Bürstenmaterial (12) bei einer Eintauchtiefe der Bürste behandelt wird,
während der Behandlung der Fahrzeugfläche die rotierende Bürste ausgehend von einem Sollwert für die Reibung des Bürstenmaterials an der Fahrzeugfläche geregelt wird,
wobei während der Behandlung der Fahrzeugfläche zur Ermittlung des Zustands des Bürstenmaterials die Eintauchtiefe der rotierenden Bürste an den damit behandelten Fahrzeugflächen bei dem Sollwert überwacht wird.

2. Verfahren nach Anspruch 1,
wobei die Daten für mindestens ein Element ausgewählt aus der Eintauchtiefe der Bürste und des Zustands des Bürstenmaterials während der Behandlung der Fahrzeugfläche gewonnen werden; und/oder
wobei während der Behandlung zur Kompensation eines sich verändernden Zustands, insbesondere eines sich verringernden Qualitätszustands, des Bürstenmaterials der Sollwert für die Reibung entsprechend angepasst, insbesondere verringert, wird; und/oder
wobei die Eintauchtiefe der Bürste während mindestens einer Behandlung und/oder einer Abfolge von Behandlungen von Fahrzeugflächen überwacht wird.

3. Verfahren nach Anspruch 2,
wobei durch die Anpassung des Sollwerts für die Reibung die Eintauchtiefe im Wesentlichen konstant gehalten wird; und/oder
wobei die Anpassung des Sollwerts für die Reibung schrittweise und/oder bei Erreichen eines Grenzwerts der Eintauchtiefe, insbesondere eines oberen Grenzwerts der Eintauchtiefe, durchgeführt wird.

4. Verfahren nach einem der vorstehenden Ansprüche,
wobei mindestens ein Element ausgewählt aus der überwachten Eintauchtiefe, den Daten für die Eintauchtiefe und den Daten für den Zustand des Bürstenmaterials während der Behandlung oder während der Abfolge von Behandlungen der Fahrzeugflächen gespeichert und statistisch gemittelt wird; und/oder
wobei mindestens ein Schritt ausgewählt aus der Überwachung der Eintauchtiefe und der Anpassung des Sollwerts für die Reibung automatisch erfolgt.

5. Verfahren nach einem der vorstehenden Ansprüche,
wobei die mindestens eine Fahrzeugfläche eine oder mehrere Fahrzeugflächen eines oder mehrerer Fahrzeuge, insbesondere eine Fahrzeugfläche gleichen Typs mehrerer Fahrzeuge, ist; und/oder
wobei die mindestens eine Fahrzeugfläche ausgewählt ist aus einer Dachfläche, einer Frontfläche, einer Heckfläche, einer oder mehrerer Seitenflächen und einer Kombination davon; und/oder
wobei die Fahrzeugflächen einer Mehrzahl von Fahrzeugen, insbesondere einer Mehrzahl von Fahrzeugen unterschiedlichen Typs, behandelt werden.

6. Verfahren nach einem der vorstehenden Ansprüche,
wobei die Bürste mittels einer Leistungsaufnahme eines Rotationsantriebs der Bürste geregelt wird und wobei als Sollwert für die Reibung die Leistungsaufnahme des Rotationsantriebs bei einer bekannten Eintauchtiefe der Bürste verwendet wird; und/oder
wobei zu Beginn der Behandlung oder der Abfolge von Behandlungen ein Anfangswert des Sollwerts für die Reibung durch Verfahren der rotierenden Bürste in eine Position einer bekannten Eintauchtiefe relativ zu einer Fahrzeugfläche mit bekannter Position ermittelt wird.

7. Verfahren nach einem der vorstehenden Ansprüche,
wobei zur Überwachung und/oder Ermittlung der Eintauchtiefe die Position der Bürste und die Position der damit behandelten Fahrzeugfläche verglichen werden.

8. Verfahren nach Anspruch 7,
wobei die Position der Bürste und die Position der damit behandelten Fahrzeugfläche bei bekannten, zur Längserstreckung der Bürste parallelen und/oder senkrechten Abmessungen der behandelten Fahrzeugfläche verglichen werden.

9. Verfahren nach einem der vorstehenden Ansprüche,
wobei zur Ermittlung der Position einer oder mehrerer Fahrzeugflächen die Fahrzeuglänge, die Fahrzeughöhenkontur und/oder die Fahrzeugbreite bestimmt werden; und/oder
wobei mindestens ein Element ausgewählt aus der Position einer oder mehrerer der Fahrzeugflächen, der Fahrzeuglänge, der Fahrzeughöhenkontur und/oder der Fahrzeugbreite während der Behandlung der Fahrzeugflächen bestimmt wird.

10. Verfahren nach einem der vorstehenden Ansprüche,
wobei die Fahrzeuglänge und/oder die Fahrzeughöhenkontur mittels Sensoren bestimmt werden; und/oder
wobei die Fahrzeugbreite dadurch bestimmt wird, dass ein zu erwartender Sollwert für die Reibung mindestens einer rotierenden Seitenbürste bei einer bekannten Eintauchtiefe der Seitenbürste an einer Front- oder Heckfläche des Fahrzeugs ermittelt wird, mit der so kalibrierten Seitenbürste an Seitenflächen des Fahrzeugs der zu erwartenden Sollwert eingestellt wird und aus der bekannten Eintauchtiefe und der Position der Seitenbürste die Position der Seitenflächen ermittelt wird.

11. Verfahren nach einem der vorstehenden Ansprüche,
wobei die Bürste schwingend oder in einem festen oder einstellbaren Neigungswinkel gehalten wird.

12. Verfahren nach Anspruch 11,
wobei der Neigungswinkel der Bürste ermittelt wird, insbesondere mittels eines Winkelsensors; und/oder
wobei der Neigungswinkel der Front-, Heck- und/oder Seitenflächen aus dem Neigungswinkel einer Seitenbürste abgeleitet wird.

13. Verfahren nach einem der vorstehenden Ansprüche,
wobei bei der Erstinbetriebnahme der Fahrzeugbehandlungsanlage mit dem Verfahren nach einem der vorstehenden Ansprüche Grundparameter der Bürsten der Anlage automatisch angelernt werden.

14. Verfahren nach einem der vorstehenden Ansprüche,
wobei während der Anpassung des Sollwerts bei einem unteren Grenzwert des Sollwerts, insbesondere bei einem Mindestwert für die Leistungsaufnahme des Rotationsantriebs der Bürste, eine Meldung an einen Bediener, insbesondere automatisch, ausgegeben wird.

15. Fahrzeugbehandlungsanlage, insbesondere Fahrzeugwaschanlage, umfassend mindestens eine Bürste (14; 24) mit einem Bürstenmaterial (12) zum Behandeln von Fahrzeugflächen (15; 16), wobei die Bürste rotierbar gelagert und in eine Fahrzeugbehandlungsposition (17) bei einer Eintauchtiefe der Bürste an einer zu behandelnden Fahrzeugfläche verfahrbar ist;
eine Bürstenverfahrvorrichtung (18) zum Verfahren der Bürste in Positionen relativ zur zu behandelnden Fahrzeugfläche;
einen Bürstenrotationsantrieb (19);
einen Sensor (20) zur Ermittlung einer Reibung des Bürstenmaterials an der zu behandelnden Fahrzeugfläche, insbesondere einen Leistungsaufnahmesensors des Rotationsantriebs;
eine Einrichtung (21) zum Ermitteln der Position einer oder mehrerer der Fahrzeugflächen; und
eine datenverarbeitende Speicher- und Steuereinheit (22), die datenleitend mit mindestens einer Einheit ausgewählt aus der Bürstenverfahrvorrichtung, dem Bürstenrotationsantrieb, dem Sensor zur Ermittlung einer Reibung des Bürstenmaterials an der zu behandelnden Fahrzeugfläche und der Einrichtung zum Ermitteln der Position einer oder mehrerer der Fahrzeugflächen verbunden ist, die zum Speichern von diesen Einheiten empfangener Daten ausgebildet ist und die zum Steuern des Verfahrens nach einem der vorstehenden Ansprüche ausgebildet ist.

16. Fahrzeugbehandlungsanlage nach Anspruch 15,
bei der mindestens ein Element ausgewählt aus der Bürste, der Bürstenverfahrvorrichtung und dem Bürstenrotationsantrieb mittels der Speicher- und Steuereinheit regelbar ist; und/oder
bei der in der Speicher- und Steuereinheit ein Programm implementiert ist, das dazu ausgelegt ist, die Speicher- und Steuereinheit und/der die Fahrzeugbehandlungsanlage dazu zu veranlassen, ein Verfahren nach einem der Ansprüche 1 bis 14 auszuführen.

17. Verwendung einer Fahrzeugbehandlungsanlage nach Anspruch 15 oder 16 zum Ausführen eines Verfahrens nach einem der Ansprüche 1 bis 14.

18. Computerprogrammprodukt, umfassend Programmelemente, die einen Server oder einen Computer oder eine Ausführungseinheit, insbesondere eine Speicher- und Steuereinheit einer Fahrzeugbehandlungsanlage nach Anspruch 15 oder 16 und/oder eine Fahrzeugbehandlungsanlage nach Anspruch 15 oder 16, dazu veranlassen, das Verfahren nach einem der Ansprüche 1 bis 14 auszuführen, wenn die Programmelemente in einen Speicher des Servers oder des Computers oder der Ausführungseinheit, insbesondere in die Speicher- und Steuereinheit der Fahrzeugbehandlungsanlage nach Anspruch 15 oder 16, geladen werden.

## Claims

1. Method for operating a vehicle treatment installation, in particular a vehicle washing installation, in which
at least one vehicle surface (15; 16) is treated with at least one rotating brush (14; 24) with a brush material (12) at an immersion depth of the brush,
during the treatment of the vehicle surface the rotating brush is controlled on the basis of a sepoint for the friction of the brush material on the vehicle surface, wherein during the treatment of the vehicle surface the immersion depth of the rotating brush on the vehicle surfaces treated therewith is monitored at the setpoint in order to determine the condition of the brush material.

2. Method according to claim 1,
wherein the data for at least one element selected from the immersion depth of the brush and the condition of the brush material are obtained during the treatment of the vehicle surface; and/or
wherein during the treatment, in order to compensate for a changing condition, in particular a decreasing quality condition, of the brush material, the setpoint for the friction is adjusted accordingly, in particular reduced; and/or
wherein the immersion depth of the brush is monitored
during at least one treatment and/or a sequence of treatments of vehicle surfaces.

3. Method according to claim 2,
wherein the immersion depth is kept substantially constant by adjusting the setpoint for the friction; and/or wherein the adjustment of the
setpoint for the friction is carried out stepwise and/or when a limit value of the immersion depth is reached, in particular an upper limit value of the immersion depth.

4. Method according to any one of the preceding claims,
wherein at least one element selected from the monitored immersion depth, the data for the immersion depth and the data for the condition of the brush material during the treatment or during the sequence of treatments of the vehicle surfaces is stored and statistically averaged; and/or wherein
at least one step selected from monitoring the immersion depth and adjusting the setpoint for the friction is performed automatically.

5. Method according to any one of the preceding claims,
wherein the at least one vehicle surface is one or more vehicle surfaces of one or more vehicles, in particular a vehicle surface of the same type of a plurality of vehicles; and/or wherein the
at least one vehicle surface is selected from a roof surface, a front surface, a rear surface, one or more side surfaces and a combination thereof; and/or
wherein the vehicle surfaces of a plurality of vehicles, in particular a plurality of vehicles of different types, are treated.

6. Method according to any one of the preceding claims,
wherein the brush is controlled by means of a power consumption of a rotary drive of the brush, and wherein the power consumption of the rotary drive at a known immersion depth of the brush is used as a setpoint for the friction; and/or wherein, at the start of the treatment or sequence of treatments, an initial value of the friction setpoint is determined by moving the rotating brush to a position of known immersion depth relative to a vehicle surface of known position.

7. Method according to any one of the preceding claims,
wherein the position of the brush and the position of the vehicle surface treated therewith are compared for monitoring and/or determining the immersion depth.

8. Method of claim 7,
wherein the position of the brush and the position of the vehicle surface treated therewith are compared at known dimensions of the treated vehicle surface parallel and/or perpendicular to the longitudinal extension of the brush.

9. Method according to any one of the preceding claims,
wherein the vehicle length, the vehicle height contour and/or the vehicle width are determined to determine the position of one
or more of the vehicle surfaces; and/or wherein at least one element selected from the position of one or more of the vehicle surfaces, the vehicle length, the vehicle height contour and/or the vehicle width is determined during the treatment of the vehicle surfaces.

10. Method according to one of the preceding claims,
wherein the vehicle length and/or the vehicle height contour are determined by means of sensors; and/or
wherein the vehicle width is determined by determining an expected setpoint for the friction of at least one rotating side brush at a known immersion depth of the side brush on a front or rear surface of the vehicle, setting the expected setpoint with the side brush calibrated in this way on side surfaces of the vehicle, and determining the position of the side surfaces from the known immersion depth and the position of the side brush.

11. Method of any one of the preceding claims,
wherein the brush is held oscillating or at a fixed or adjustable angle of inclination.

12. Method of claim 11,
wherein the angle of inclination of the brush is determined, in particular by means of an angle sensor; and/or wherein the
angle of inclination of the front, rear and/or side surfaces is derived from the angle of inclination of a side brush.

13. Method according to any one of the preceding claims,
wherein basic parameters of the brushes of the installation are automatically taught-in during the initial start-up of the vehicle treatment installation with the method according to any one of the preceding claims.

14. Method according to one of the preceding claims,
wherein during the adaptation of the setpoint at a lower limit value of the setpoint, in particular at a minimum value for the power consumption of the rotary drive of the brush, a message is output to an operator, in particular automatically.

15. Vehicle treatment system, in particular vehicle washing system, comprising at least one brush (14; 24) with a brush material (12) for treating vehicle surfaces (15; 16), the brush being rotatably mounted and movable into a vehicle treatment position (17) at an immersion depth of the brush on a vehicle surface to be treated;
a brush traversing device (18) for moving the brush into positions relative to the vehicle surface to be treated;
a brush rotary drive (19)
a sensor (20) for detecting a friction of the brush material against the vehicle surface to be treated, in particular a power pick-up sensor of the rotary drive;
means (21) for detecting the position of one or more of the vehicle surfaces and
a data processing storage and control unit (22) which is connected in a data-conducting manner to at least one unit selected from the brush traversing device, the brush rotary drive, the sensor for determining a friction of the brush material on the vehicle surface to be treated and the device for determining the position of one or more of the vehicle surfaces, which is designed to store data received from these units and which is designed to control the method according to one of the preceding claims.

16. Vehicle treatment system according to claim 15,
in which at least one element selected from the brush, the brush traversing device - and the brush rotary drive is controllable by means of the memory and control unit; and/or
wherein a program is implemented in the memory and control unit, the program being adapted to cause the memory and control unit and/or the vehicle treatment system to perform a method according to any one of claims 1 to 14.

17. Use of a vehicle treatment system according to claim 15 or 16 for carrying out a method according to any one of claims 1 to 14.

18. Computer program product comprising program elements which cause a server or a computer or an execution unit, in particular a memory and control unit of a vehicle treatment system according to claim 15 or 16 and/or a vehicle treatment system according to claim 15 or 16, to execute the method according to any one of claims 1 to 14 when the program elements are loaded into a memory of the server or the computer or the execution unit, in particular into the memory and control unit of the vehicle treatment system according to claim 15 or 16.

## Revendications

1. Procédé pour faire fonctionner une installation de traitement de véhicules, en particulier une installation de lavage de véhicules, dans lequel au moins une surface de véhicule (15 ; 16) est traitée avec au moins une brosse rotative (14 ; 24) est traitée avec un matériau de brosse (12) à une profondeur d'immersion de la brosse,
pendant le traitement de la surface du véhicule, la brosse rotative est réglée à partir d'une valeur de consigne pour le frottement du matériau de brosse sur la surface du véhicule,
la profondeur d'immersion de la brosse rotative sur les surfaces du véhicule traitées avec celle-ci étant surveillée à la valeur de consigne pendant le traitement de la surface du véhicule pour déterminer l'état du matériau de brosse.

2. Procédé selon la revendication 1,
dans lequel les données pour au moins un élément choisi parmi la profondeur d'immersion de la brosse et l'état du matériau de la brosse sont obtenues pendant le traitement de la surface du véhicule ; et/ou
dans lequel, pendant le traitement, pour compenser un état changeant, en particulier un état de qualité qui diminue, du matériau de la brosse, la valeur de consigne pour le frottement est adaptée en conséquence, en particulier est réduite ; et/ou dans lequel la profondeur d'immersion de la brosse est surveillée pendant au moins un traitement et/ou une succession de traitements de surfaces de véhicules.

3. Procédé selon la revendication 2,
dans lequel l'adaptation de la valeur de consigne pour le frottement permet de maintenir la profondeur d'immersion sensiblement constante ; et/ou dans lequel l'adaptation de la valeur de consigne pour le frottement est réalisée par étapes et/ou lorsqu'une valeur limite de la profondeur d'immersion, notamment une valeur limite supérieure de la profondeur d'immersion, est atteinte.

4. Procédé selon l'une quelconque des revendications précédentes,
dans lequel au moins un élément choisi parmi la profondeur d'immersion surveillée, les données relatives à la profondeur d'immersion et les données relatives à l'état du matériau de la brosse pendant le traitement ou pendant la séquence de traitements des surfaces du véhicule est stocké et moyenné statistiquement ; et/ou au moins une étape choisie parmi la surveillance de la profondeur d'immersion et l'adaptation de la valeur de consigne pour le frottement étant effectuée automatiquement.

5. Procédé selon l'une quelconque des revendications précédentes,
dans lequel ladite au moins une surface de véhicule est une ou plusieurs surfaces de véhicule d'un ou plusieurs véhicules, en particulier une surface de véhicule du même type de plusieurs véhicules ; et/ou
dans lequel ladite au moins une surface de véhicule est choisie parmi une surface de toit, une surface avant, une surface arrière, une ou plusieurs surfaces latérales et une combinaison de celles-ci ; et/ou
dans lequel les surfaces de véhicule d'une pluralité de véhicules, en particulier d'une pluralité de véhicules de types différents, sont traitées.

6. Procédé selon l'une quelconque des revendications précédentes,
dans lequel la brosse est régulée au moyen d'une consommation de puissance d'un entraînement rotatif de la brosse et dans lequel la consommation de puissance de l'entraînement rotatif à une profondeur d'immersion connue de la brosse est utilisée comme valeur de consigne pour le frottement ; et/ou
dans lequel, au début du traitement ou de la séquence de traitements, une valeur initiale de la valeur de consigne pour le frottement est déterminée en déplaçant la brosse rotative dans une position d'une profondeur d'immersion connue par rapport à une surface de véhicule ayant une position connue.

7. Procédé selon l'une des revendications précédentes,
dans lequel, pour surveiller et/ou déterminer la profondeur d'immersion, on compare la position de la brosse et la position de la surface du véhicule traitée avec cette brosse.

8. Procédé selon la revendication 7,
dans lequel la position de la brosse et la position de la surface du véhicule traitée avec celle-ci sont comparées pour des dimensions connues de la surface du véhicule traitée, parallèles et/ou perpendiculaires à l'extension longitudinale de la brosse.

9. Procédé selon l'une quelconque des revendications précédentes,
dans lequel, pour déterminer la position d'une ou plusieurs surfaces de véhicule, on détermine la longueur du véhicule, le contour de hauteur du véhicule et/ou la largeur du véhicule ; et/ou
dans lequel on détermine au moins un élément choisi parmi la position d'une ou plusieurs des surfaces de véhicule, la longueur du véhicule, le contour de hauteur du véhicule et/ou la largeur du véhicule pendant le traitement des surfaces de véhicule.

10. Procédé selon l'une des revendications précédentes,
dans lequel la longueur du véhicule et/ou le contour de hauteur du véhicule sont déterminés au moyen de capteurs ; et/ou
dans lequel la largeur du véhicule est
déterminée en déterminant une valeur de consigne
attendue pour le frottement d'au moins une brosse latérale rotative pour une profondeur d'immersion connue de la brosse latérale sur une surface avant ou arrière du véhicule, en réglant la valeur de consigne attendue avec la brosse latérale ainsi calibrée sur des surfaces latérales du véhicule et en déterminant la position des surfaces latérales à partir de la profondeur d'immersion connue et de la position de la brosse latérale.

11. Procédé selon l'une quelconque des revendications précédentes,
dans lequel la brosse est maintenue
en oscillation ou selon un angle d'inclinaison fixe ou réglable.

12. Procédé selon la revendication 11,
dans lequel l'angle d'inclinaison de la brosse est déterminé, en particulier au moyen d'un capteur d'angle ; et/ou
dans lequel l'angle d'inclinaison des surfaces avant, arrière et/ou latérales est déduit de l'angle d'inclinaison d'une brosse latérale.

13. Procédé selon l'une des revendications précédentes,
dans lequel, lors de la première mise en service de l'installation de traitement de véhicules avec le procédé selon l'une des revendications précédentes, des paramètres de base des brosses de l'installation sont appris automatiquement.

14. Procédé selon l'une quelconque des revendications précédentes,
dans lequel, pendant l'adaptation de la valeur de consigne, à une valeur limite inférieure de la valeur de consigne, notamment à une valeur minimale de la puissance absorbée par l'entraînement en rotation de la brosse, un message est émis, notamment automatiquement, à destination d'un opérateur.

15. Installation de traitement de véhicules, en particulier installation de lavage de véhicules, comprenant
au moins une brosse (14 ; 24) avec un matériau de brosse (12) pour le traitement de surfaces de véhicules (15 ; 16), la brosse étant logée de manière rotative et pouvant être déplacée dans une position de traitement de véhicules (17) à une profondeur d'immersion de la brosse sur une surface de véhicule à traiter ;
un dispositif de déplacement de la brosse (18) pour déplacer la brosse dans des positions par rapport à la surface du véhicule à traiter ;
un entraînement de rotation de la brosse (19) ;
un capteur (20) pour déterminer un frottement du matériau de la brosse sur la surface du véhicule à traiter, en particulier un capteur de consommation de puissance de l'entraînement rotatif ;
un dispositif (21) pour déterminer la position d'une ou de plusieurs des surfaces du véhicule ; et
une unité de mémoire et de commande (22) traitant des données, qui est reliée par conduction de données à au moins une unité choisie parmi le dispositif de déplacement de la brosse, l'entraînement rotatif de la brosse, le capteur pour déterminer un frottement du matériau de la brosse sur la surface du véhicule à traiter et le dispositif pour déterminer la position d'une ou de plusieurs des surfaces du véhicule, qui est conçue pour mémoriser des données reçues de ces unités et qui est conçue pour commander le procédé selon l'une des revendications précédentes.

16. Installation de traitement de véhicules selon la revendication 15,
dans laquelle au moins un élément choisi parmi la brosse, le dispositif de déplacement de la brosse et l'entraînement en rotation de la brosse est réglable au moyen de l'unité de mémoire et de commande ; et/ou
dans lequel un programme est mis en oeuvre dans l'unité de mémoire et de commande, lequel programme est conçu pour amener l'unité de mémoire et de commande et/ou l'installation de traitement de véhicules à exécuter un procédé selon l'une quelconque des revendications 1 à 14.

17. Utilisation d'une installation de traitement de véhicules selon la revendication 15 ou 16 pour la mise en oeuvre d'un procédé selon l'une quelconque des revendications 1 à 14.

18. Produit programme d'ordinateur comprenant des éléments de programme qui amènent un serveur ou un ordinateur ou une unité d'exécution, en particulier une unité de mémoire et de commande d'un système de traitement de véhicule selon la revendication 15 ou 16 et/ou un système de traitement de véhicule selon la revendication 15 ou 16, à exécuter le procédé selon l'une quelconque des revendications 1 à 14 lorsque les éléments de programme sont chargés dans une mémoire du serveur ou de l'ordinateur ou de l'unité d'exécution, en particulier dans l'unité de mémoire et de commande du système de traitement de véhicule selon la revendication 15 ou 16.
